# EUROPEAN PATENT SPECIFICATION

(11) **EP 3 515 793 B1**
(45) Date of publication and mention of the grant of the patent: **04.11.2020**
(21) Application number: 17786999.7
(22) Date of filing: 19.09.2017
(51) Int. Cl.: B62D 33/06, B60N 2/50

(54) **DRIVING PLACE OF A COMMERCIAL OR HEAVY VEHICLE AND COMMERCIAL OR HEAVY VEHICLE COMPRISING SAID DRIVING PLACE**
FAHRERSITZ EINES NUTZ- ODER SCHWERLASTFAHRZEUGS UND NUTZ- ODER SCHWERLASTFAHRZEUG MIT DIESEM FAHRERSITZ
POINT DE CONDUITE D'UN VÉHICULE UTILITAIRE OU LOURD ET VÉHICULE UTILITAIRE OU LOURD COMPRENANT LEDIT POINT DE CONDUITE

(30) Priority: 19.09.2016 IT 201600093800
(43) Date of publication of application: 31.07.2019
(73) Proprietor: Iveco S.p.A., 10156 Torino (IT)
(72) Inventor: ARMIGLIATO, Marco, 10153 Torino (IT); VERGANO, Raffaele, 10020 Cambiano (IT); FINOTELLO, Roberto, 10040 Lombardore (IT)
(74) Representative: Bongiovanni, Simone
(86) International application number: PCT/IB2017/055673
(87) International publication number: WO 2018/051318

(56) References cited:
- WO-A1-2014/003609
- DD-A1- 110 815
- DE-A1-102010 054 410
- DE-C1- 3 839 165
- FR-A1- 2 608 121
- GB-A- 1 440 686
- US-A- 3 774 711
- US-A- 4 392 546

## Description

### Field of the invention

The present invention relates to a driving place of a vehicle, in particular a commercial or heavy vehicle. A driving place includes at least the driving seat, the steering wheel and the pedal unit. It may also include the dashboard with instrumentation and various controls and, if the vehicle is equipped with a manual gearbox, a gear lever.

### Prior art

Vehicles with a large mass, such as commercial or heavy vehicles, must necessarily provide a further damping system for the driving seat beside the vehicle shock absorbers, i.e. those connecting the wheels to the vehicle chassis.

In fact, too soft vehicle shock absorbers would make the vehicle difficult to control, whereas too rigid shock absorbers would improve the vehicle dynamics but would damage the musculoskeletal structure of the driver's torso. Therefore, it is common practice to implement damped seats.

In the case of particularly heavy industrial vehicles, the cabin is associated with the vehicle chassis by means of an additional damping system.

Therefore, the body of the driver is protected by the vehicle shock absorbers, by the cabin shock absorbers and by the driving seat damping system.

The combined behaviour of these damping systems is not easily predictable because it depends on the load carried by the vehicle, by the total load in the cabin and ultimately by the weight of the driver.

This can lead to over-extensions of the driving seat damping system, with the consequence that the driver can completely lose contact with the pedal unit, including the brake pedal unit.

Examples of known driving place for vehicle are discloses in documents DD110815 A1, US3774711 A, GB1440686 A, US4392546 A, DE1020100544410 A1, FR2608121 A1, DE3839165 C1 or WO2014/003609 A1. Therefore the object of the present invention is to preserve the driver's comfort level without however risking situations in which the driver has difficulty reaching and controlling the vehicle controls.

### Summary of the Invention

The basic idea object of the present invention is to make at least the driving seat, the steering wheel and the pedal unit, which are rigidly connected to each other and fastened to a single portion of the floor, damped with respect to the vehicle cabin.

The above mentioned objects are reached by a driving place according to the appended set of claims and by a cabin and a vehicle comprising such a driving place.

### Brief description of the figures

Further objects and advantages of the present invention will become apparent from the following detailed description of an embodiment of the invention (and of its variants) and from the accompanying drawings given in a purely illustrative and non-limiting manner, in which:
Figure 1 schematically shows a side view of a vehicle cabin with the driving place of a commercial or heavy vehicle object of the present invention;
Figure 2 is a top view of the same driving place with parts shown in phantom;
Figure 3 shows an industrial vehicle comprising the cabin shown in Figures 1 and 2.

The same reference numbers and letters in the figures identify the same elements or components.

Within the scope of this description, the term "second" does not imply the presence of a "first" component. In fact, these terms are only used for clarity's sake and should not be used in a restrictive way.

### Detailed description of the embodiments

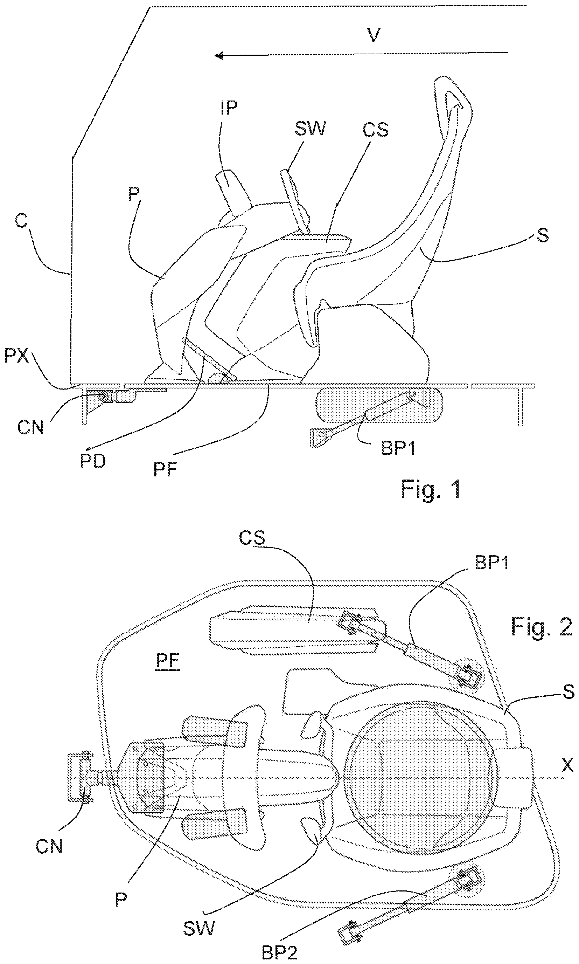

The driving place according to Figures 1 and 2 is especially designed to be implemented in a commercial or heavy vehicle.

It includes a driving seat S, a steering wheel SW and a pedal unit PD. According to the present invention, at least three of these elements are rigidly connected to each other and are fastened to a single floor portion PF, which, in turn, is connected to a vehicle cabin in a damped manner to react to road surface irregularities.

Evidently, said floor portion defines a rigid body. Preferably, said floor portion PF is connected only to said driving seat S, said steering wheel SW and said pedal unit. Optionally, to a side console CS as well.

The purpose is limiting the weight of the seat so as to make the dynamic behaviour more comfortable.

The steering wheel is fixed to the movable floor portion by means of a relative column and can be either mechanical, i.e. comprise a transmission shaft, or "by wire", i.e. where the movement of the steering wheel is detected by an angular sensor controlling an electric or hydraulic actuator that drives the steering wheels.

As shown in the figures, the steering column also houses the instrumentation, preferably digital, which sums up in a small space and weight the main functions of the vehicle. The side console, in turn, may include additional controls to operate those functions that are most closely related to the driver's comfort, such as air conditioning, radio, etc. Therefore, thanks to the present invention, the driving seat defines a rigid body rigidly connected to said floor portion.

It can include common seat settings, namely height, backrest inclination and longitudinal adjustment that involves approaching/moving away from the steering column. According to a preferred variant of the invention, the floor portion PF has a edge hinged by means of a hinge CN to said cabin C and one or more shock absorbers BP, BP1, BP2 having a first end hinged to said floor portion and a second end, opposite to the first, hinged to a fixed point of the cabin to damp the oscillations of said floor portion, floating with respect to said hinge CN.

In order to oscillate the driving place to react to road surface irregularities, the hinge CN obviously has a horizontal axis, preferably transverse with respect to a vehicle travelling direction.

Preferably, this hinge is arranged before the steering wheel following the vehicle travelling direction, schematized by the arrow V, so that the steering wheel is in an intermediate position between the hinge and the driving seat. Obviously, also the pedal unit is arranged between the hinge and the driving seat.

Depending on the possible configurations, the pedal unit can be closer to the hinge than the column, and vice versa, the pedal unit may be in the intermediate position between the steering column and the driving seat.

According to a preferred embodiment of the invention, when the steering wheel is of the type known as "by wire", the steering column can be absent and the steering wheel is supported by the same side console CS so that it is operatively in front of the driving seat.

Preferably, said one or more shock absorbers BP or BP1, BP2 are double-acting and are entirely arranged under the floor portion PF.

According to Figure 2, the oscillations of said floor portion PF are damped by a pair of double-acting shock absorbers BP1, BP2, wherein the two shock absorbers are arranged on the right and on the left with respect to the driving seat, mutually converging towards an axis X ideally passing through said hinge CN and through the centre of gravity of the driving seat.

Said axis X is substantially parallel to the longitudinal development of the vehicle or, equivalently, to the vehicle travelling direction.

Preferably, the ends of the shock absorbers hinged to the cabin are facing forward with respect to the vehicle travelling direction, whereas the ends hinged to the floor portion are facing backward, thus converging on said axis X.

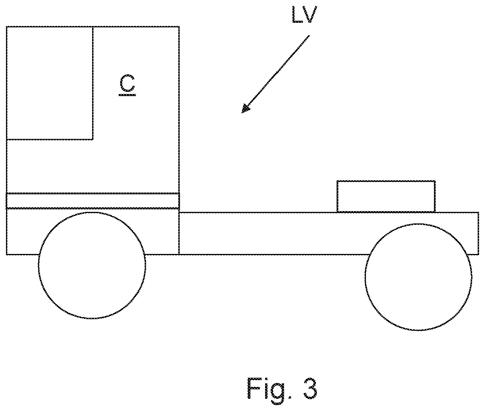

Figure 3 shows an industrial vehicle LV, in particular a road tractor for towing a semi-trailer, comprising the aforesaid cabin C.

The cabin may or may not be connected to the vehicle chassis by means of additional shock absorbers, not shown. Variants of the embodiments of the described non-limiting example are possible without departing from the scope of the present as defined by the appended claims, including all equivalent embodiments for a person skilled in the art.

From the above description, the person skilled in the art is able to manufacture the object of the invention without introducing further constructive details.

## Claims

1. A driving place of a commercial or heavy vehicle comprising a driving seat (S), a steering wheel (SW) and a pedal unit (PD) rigidly connected to each other and fastened to a single floor portion (PF), wherein said floor portion (PF) is connected to a vehicle cabin (C) in a damped manner to react to road surface irregularities, **characterized in that** said floor portion (PF) has an edge hinged, by means of a hinge (CN), to said cabin (C) and one or more shock absorbers (BP, BP1, BP2) have a first end hinged to said floor portion (PF) and a second end, opposite to the first, hinged to a fixed point of the cabin© to damp the oscillations of said floor portion (FP) with respect to said hinge.

2. A driving place according to claim 1, wherein only said driving seat (S), said steering wheel (SW) and said pedal unit are connected to said floor portion (PF).

3. A driving place according to claim 1, wherein only said driving seat (S), said steering wheel (SW) and said pedal unit and a side console (CS) are connected to said floor portion (PF).

4. A driving place according to any one of the preceding claims, wherein said driving seat defines a rigid body and is rigidly connected to said floor portion.

5. A driving place according to any one of the preceding claims, wherein said hinge (CN) has a horizontal axis, which is transverse with respect to a vehicle travelling direction.

6. A driving place according to any one of the preceding claims, wherein said steering wheel is in an intermediate position between said hinge (CN) and said driving seat.

7. A driving place according to any one of the preceding claims, wherein said one or more shock absorbers are double-acting and are arranged entirely below the floor.

8. A driving place according to claim 7, wherein the oscillations of said floor portion are damped by means of a pair of double-acting shock absorbers (BP1, BP2), wherein the two shock absorbers are arranged on the right and on the left with respect to the driving seat and are mutually converging towards an axis (X), which ideally passes through said hinge (CN) and through a centre of gravity of the driving seat.

9. A driving place according to claim 8, wherein said axis (X) is parallel to a direction of movement of said vehicle.

10. A vehicle cabin comprising a driving place according to any one of claims from 1 to 9.

11. A commercial or heavy vehicle comprising a cabin according to claim 10.

## Patentansprüche

1. Steuerplatz eines Nutz- oder Schwerlastfahrzeugs, umfassend einen Fahrersitz (S), eine Lenkrad (SW) und eine Pedaleinheit (PD), fest miteinander verbunden und an einem einzigen Bodenabschnitt (PF) befestigt, wobei der Bodenabschnitt (PF) mit einer Fahrzeugkabine (C) dämpfend verbunden ist, um auf Straßenbelagsunebenheiten zu reagieren, **dadurch gekennzeichnet, dass** ein Rand des Bodenabschnitts (PF) mittels eines Scharniers (CN) an die Kabine (C) angelenkt ist und einer oder mehrere Stoßdämpfer (BP, BP1, BP2) mit einem ersten Ende an den Bodenabschnitt (PF) und mit einem zweiten, dem ersten Ende gegenüber liegenden Ende an einen Festpunkt der Kabine (C) angelenkt sind, um die Schwingungen des Bodenabschnitts (FP) in Bezug auf das Scharnier zu dämpfen.

2. Steuerplatz nach Anspruch 1, wobei nur der Fahrersitz (S), das Lenkrad (SW) und die Pedaleinheit mit dem Bodenabschnitt (PF) verbunden sind.

3. Steuerplatz nach Anspruch 1, wobei nur der Fahrersitz (S), das Lenkrad (SW) und die Pedaleinheit und eine Seitenkonsole (CS) mit dem Bodenabschnitt (PF) verbunden sind.

4. Steuerplatz nach einem der vorstehenden Ansprüche, wobei der Fahrersitz ein starrer Körper ist und starr mit dem Boden verbunden ist.

5. Steuerplatz nach einem der vorstehenden Ansprüche, wobei das Scharnier (CN) eine horizontale Achse hat, die quer zu einer Fahrzeugfahrtrichtung ist.

6. Steuerplatz nach einem der vorstehenden Ansprüche, wobei das Lenkrad in einer Zwischenposition zwischen dem Scharnier (CN) und dem Fahrersitz ist.

7. Steuerplatz nach einem der vorstehenden Ansprüche, wobei einer oder mehrere Stoßdämpfer doppelwirkend und vollständig unter dem Boden angeordnet sind.

8. Steuerplatz nach Anspruch 7, wobei die Schwingungen des Bodenabschnitts mittels zweier doppelwirkender Stoßdämpfer (BP1, BP2) gedämpft werden, wobei die zwei Stoßdämpfer rechts und links in Bezug auf den Fahrersitz angeordnet sind und zueinander in Richtung einer Achse (X) konvergieren, die idealerweise durch das Scharnier (CN) und die Mitte des Schwerpunkts des Fahrersitzes verläuft.

9. Steuerplatz nach Anspruch 8, wobei die Achse (X) parallel zu einer Bewegungsrichtung des Fahrzeugs verläuft.

10. Fahrzeugkabine, umfassend einen Steuerplatz nach einem der Ansprüche 1 bis 9.

11. Nutz- oder Schwerlastfahrzeug, umfassend eine Fahrzeugkabine nach Anspruch 10.

## Revendications

1. Poste de conduite d'un véhicule utilitaire ou lourd comprenant un siège de conduite (S), un volant (SW) et une unité de pédale (PD) rigidement raccordés entre eux et fixés à une seule partie de plancher (PF), dans lequel ladite partie de plancher (PF) est raccordée à une cabine de véhicule (C) d'une manière amortie pour réagir aux irrégularités de surface d'une route, **caractérisé en ce que** ladite partie de plancher (PF) a un bord articulé, au moyen d'une charnière (CN), par rapport à ladite cabine (C) et un ou plusieurs amortisseurs (BP, BP1, BP2) ont une première extrémité articulée par charnière par rapport à ladite partie de plancher (PF) et une second extrémité, opposée à la première, articulée par charnière par rapport à un point fixe de la cabine (C) pour amortir les oscillations de ladite partie de plancher (PF) par rapport à ladite charnière.

2. Poste de conduite selon la revendication 1, dans lequel uniquement ledit siège de conduite (S), ledit volant (SW) et ladite unité de pédale sont raccordés à ladite partie de plancher (PF).

3. Poste de conduite selon la revendication 1, dans lequel uniquement ledit siège de conduite (S), ledit volant (SW) et ladite unité de pédale et une console latérale (CS) sont raccordés à ladite partie de plancher (PF) .

4. Poste de conduite selon l'une quelconque des revendications précédentes, dans lequel ledit siège de conduite définit un corps rigide et est rigidement raccordé à ladite partie de plancher.

5. Poste de conduite selon l'une quelconque des revendications précédentes, dans lequel ladite charnière (CN) a un axe horizontal qui est transversal par rapport à une direction de déplacement du véhicule.

6. Poste de conduite selon l'une quelconque des revendications précédentes, dans lequel ledit volant est dans une position intermédiaire entre ladite charnière (CN) et ledit siège de conduite.

7. Poste de conduite selon l'une quelconque des revendications précédentes, dans lequel lesdits un ou plusieurs amortisseurs sont à double effet et sont entièrement agencés au-dessous du plancher.

8. Poste de conduite selon la revendication 7, dans lequel les oscillations de ladite partie de plancher sont amorties au moyen d'une paire d'amortisseurs à double effet (BP1, BP2), dans lequel les deux amortisseurs sont agencés à droite et à gauche par rapport au siège de conduite et convergent mutuellement vers un axe (X), qui passe idéalement à travers ladite charnière (CN) et à travers un centre de gravité du siège de conduite.

9. Poste de conduite selon la revendication 8, dans lequel ledit axe (X) est parallèle à une direction de mouvement dudit véhicule.

10. Cabine de véhicule comprenant un poste de conduite selon l'une quelconque des revendications 1 à 9.

11. Véhicule utilitaire ou lourd comprenant une cabine selon la revendication 10.
